# FASCICULE DE BREVET EUROPEEN

(11) **EP 4 155 194 B1**
(45) Date de publication et mention de la délivrance du brevet: **29.10.2025**
(21) Numéro de dépôt: 22195269.0
(22) Date de dépôt: 13.09.2022
(51) Int. Cl.: B64C 11/06, B64C 11/26

(54) **PALE DE ROTOR AVEC UN SYSTEME DE RETENTION ET DE REPRISES D'EFFORTS DISSOCIES ET ROTOR MUNI DE TELLES PALES**
ROTORBLATT MIT EINEM SYSTEM ZUR GETRENNTEN RÜCKHALTUNG UND AUFNAHME VON KRÄFTEN UND ROTOR MIT SOLCHEN BLÄTTERN
ROTOR BLADE WITH A SYSTEM FOR RETAINING AND BEARING SEPARATE FORCES AND ROTOR EQUIPPED WITH SUCH BLADES

(30) Priorité: 27.09.2021 FR 2110165
(43) Date de publication de la demande: 29.03.2023
(73) Titulaire: Airbus Helicopters, 13725 Marignane Cedex (FR)
(72) Inventeur: HIRSCH, Jean-François, 13090 AIX EN PROVENCE (FR); PARIZEL, Adrien, 95270 VIARMES (FR)
(74) Mandataire: GPI Brevets

(56) Documents cités:
- FR-A1- 2 970 943
- US-A1- 2013 336 796
- US-A1- 2021 062 661
- US-B2- 9 085 986

## Description

La présente invention est du domaine des rotors d'aéronef, et en particulier des hélices d'avancement d'un aéronef.

La présente invention concerne une pale de rotor avec un système de rétention et de reprises d'efforts dissociés ainsi qu'un rotor muni de telles pales.

Un rotor peut être un rotor de sustentation d'un aéronef à voilure tournante assurant la sustentation, voire la propulsion, du giravion. Un rotor peut aussi être un rotor auxiliaire d'un aéronef à voilure tournante s'opposant au couple en lacet exercé par un rotor de sustentation sur le fuselage de cet aéronef et pour permettre également de contrôler les mouvements en lacet de cet aéronef. Un rotor peut encore être une hélice d'avancement, désignée également « hélice » par exemple, équipant un aéronef à voilure fixe ou à voilure tournante. Des hélices peuvent être placées par exemple de part et d'autre d'un fuselage de l'aéronef, éventuellement sur une aile fixe de l'aéronef. Lorsque l'aéronef comporte une seule hélice, cette hélice peut être placée sur le fuselage de l'aéronef.

Un tel rotor comporte traditionnellement un moyeu tournant et plusieurs pales montées dans le moyeu, le nombre et les dimensions des pales étant notamment tributaires de l'effort d'avancement devant être généré.

Le pas des pales peut varier au moins de façon collective, à savoir de façon identique pour toutes les pales, afin de modifier l'angle d'incidence des pales pour obtenir les performances aérodynamiques requises du rotor. La variation de pas est par exemple obtenue par une liaison à un degré de liberté en rotation, telle une liaison de type pivot, entre un pied de pale de chaque pale et le moyeu du rotor.

Selon un art antérieur répandu pour une hélice, une telle liaison à un degré de liberté en rotation comporte un ou plusieurs roulements à billes agencés entre le moyeu et le pied de pale de la pale afin de guider la rotation de la pale autour d'un axe de pas. Le pied de pale comporte également un arrêt en translation par rapport au moyeu afin de retenir la pale soumise à la force centrifuge lors de la rotation de l'hélice.

La pale peut comporter une portion profilée et un pied de pale muni d'un manchon cylindrique, la portion profilée étant solidarisée au manchon cylindrique par différents moyens.

La portion profilée de la pale peut par exemple être fixée au manchon cylindrique par des moyens de fixation démontables, tels que des vis, comme décrit dans les documents US 2765859 et US 6305905. La portion profilée peut alors être assez facilement démontée ou changée. Cependant, ces moyens de fixation démontables reprennent la majorité, voire la totalité des efforts en traction, en flexion et en torsion de la pale.

Un moyen de fixation démontable entre une portion profilée de pale et un manchon cylindrique peut aussi être un axe amovible comme décrit dans le document US 5017092.

Une portion profilée peut par exemple être fixée au manchon cylindrique par un système de rétention non démontable, notamment lorsque la portion profilée de la pale est en matériaux composites.

Un système de rétention non démontable peut comporter par exemple une forme ou une succession de formes en contre-dépouille entre le manchon cylindrique et la portion profilée comme décrit dans les documents US 2013/0129507 et US 6666651. Chaque forme en contre-dépouille constitue un moyen mécanique de rétention de la portion profilée de la pale sur le manchon cylindrique.

Le manchon cylindrique peut aussi être en métal, voire en acier inoxydable, et comporter une seule forme en contre-dépouille. La portion profilée de la pale peut être collée au manchon cylindrique en complément de la forme en contre dépouille. Le manchon cylindrique peut être dans ce cas désigné par le terme « tulipe » caractérisant sa forme particulière.

Selon les documents US 2002/0008177 et EP 2862799, un système de rétention non démontable peut comporter une structure composite de la portion profilée de la pale s'enroulant autour d'un anneau afin de former une butée mécanique avec le manchon cylindrique et à l'aide d'une pièce cylindrique disposée à l'intérieur du manchon cylindrique et de la portion profilée pour éviter la déformation de cet anneau.

Le document FR 3021030 concerne une pale comprenant une portion profilée s'étendant selon une direction longitudinale et un manchon. Le manchon comporte une restriction de passage selon une direction perpendiculaire à la direction longitudinale. La base de la portion profilée est fixée au moyeu ou au manchon par l'intermédiaire d'une douille perpendiculaire à l'axe longitudinal et présente un encombrement hors tout strictement supérieur à la largeur de la restriction de passage de sorte qu'en cas de rupture de la fixation de la dite base avec la douille, la base vient en butée contre la restriction de passage de façon à retenir la portion profilée dans le manchon.

Les documents FR 2970943 et US 9085986 décrivent une pale comportant une ferrure de fixation à un moyeu et une zone d'attache entourant une douille liée à la ferrure. La pale comporte aussi un organe de transmission des efforts de torsion formé par deux demi-coquilles enserrant conjointement la zone d'attache. Chaque demi-coquille comporte une première partie se positionnant à l'intérieur de la ferrure et une deuxième partie coopérant avec un caisson de torsion.

Le document EP 0296014 décrit une pale en matériaux composite pour un rotor arrière caréné d'hélicoptère. La pale comporte une boucle d'emplanture solidaire du longeron de la pale entourant une douille d'attache solidaire du moyeu.

Cette liaison de solidarisation entre la pale et le moyeu du rotor est sollicitée, à la fois, par un effort en traction générée par la force centrifuge due à la rotation de la pale autour de l'axe du moyeu du rotor et par des efforts en flexion et en torsion consécutifs aux charges aérodynamiques et inertielles de la pale. L'effort en traction comporte une force sensiblement parallèle à la direction longitudinale de la pale.

Les efforts en flexion peuvent comporter des forces non parallèles à la direction longitudinale de la pale et consécutives à des sollicitations en flexion de la pale par rapport à la direction longitudinale de la pale dues aux charges aérodynamiques et inertielles de la pale. Les efforts en torsion peuvent comporter des forces et/ou un ou plusieurs couples situés dans un plan sensiblement perpendiculaire à la direction longitudinale de la pale, et consécutifs à des sollicitations en torsion de la pale autour de la direction longitudinale de la pale dues aux charges aérodynamiques et inertielles de la pale.

Cette liaison de solidarisation subit ainsi des contraintes multiaxiales et de différentes natures. Cette liaison de solidarisation ne permet alors pas de répartir de façon optimale ces efforts en traction, en flexion et en torsion dans les composants de la pale, les fibres constituant les matériaux composites de la pale et éventuellement du pied de pale pouvant difficilement être orientés de façon à encaisser simultanément toutes les contraintes normales et de cisaillement combinées avec des charges statiques et de fatigue élevées.

L'art antérieur de l'invention comporte aussi les document US 2021/0062661 et US 2013/0336796.

La présente invention a alors pour objets une pale de rotor avec un système de rétention et de reprises d'efforts dissociés et un rotor muni de telles pales permettant de s'affranchir des limitations mentionnées ci-dessus en optimisant la reprise des efforts combinés en traction, en flexion et en torsion dans les composants de la pale.

La présente invention vise donc une pale pour un rotor. Cette pale est définie dans la revendication 1.

La pale selon l'invention est remarquable en ce que :
- la pale comporte un caisson de torsion creux solidaire de la portion profilée et comportant une zone d'appui en contact avec la paroi interne du manchon cylindrique,
- le dispositif d'ancrage est positionné à l'intérieur du manchon cylindrique et entoure au moins partiellement la butée,
- le corps de pale est positionné à l'intérieur du manchon cylindrique.

La pale est destinée à équiper un rotor comportant au moins deux pales et un moyeu tournant, chaque pale étant reliée au moyeu par une liaison à un degré de liberté en rotation, telle une liaison de type pivot, afin de permettre une variation du pas de ladite pale autour d'un axe de pas sensiblement parallèle à l'axe longitudinal de la pale. La liaison à un degré de liberté en rotation est plus précisément positionnée entre le moyeu et le manchon cylindrique de la pale. Lors de la rotation du rotor autour de l'axe de rotation du moyeu, l'axe longitudinal de la pale est sensiblement confondu avec une direction radiale du rotor en rotation.

Ce rotor peut être un rotor de sustentation ou un rotor auxiliaire d'un aéronef à voilure tournante. Un rotor peut aussi être une hélice d'avancement équipant un aéronef à voilure fixe ou à voilure tournante.

Lors de la rotation du rotor, la butée assure un arrêt de la pale, par l'intermédiaire du dispositif d'ancrage, selon une direction parallèle à l'axe longitudinal AXL, du manchon cylindrique vers la portion profilée. La portion profilée de la pale est ainsi maintenue en liaison avec le moyeu du rotor, la force centrifuge ayant tendance, lors de la rotation du rotor, et donc de la pale, autour d'un axe de rotation du moyeu à déplacer la pale radialement en dehors du moyeu. Le dispositif d'ancrage et la butée permettent ainsi la reprise des efforts de traction générés par la force centrifuge lors de la rotation du moyeu, et donc des pales, autour de cet axe de rotation du moyeu.

Le caisson de torsion est positionné au moins en partie à l'intérieur du manchon cylindrique et permet avec le manchon cylindrique, grâce à la zone d'appui du caisson de torsion qui est en contact avec la paroi interne du manchon cylindrique, la reprise des efforts en flexion subis par la pale consécutivement aux forces subies par la pale lors de la rotation du rotor.

Le caisson de torsion est creux et enveloppe au moins partiellement le corps de pale et le dispositif d'ancrage. Le caisson de torsion peut également envelopper éventuellement une partie d'un longeron de la pale.

Le corps de pale est positionné au moins partiellement dans le caisson de torsion et est en contact avec le caisson de torsion et le dispositif d'ancrage de sorte à limiter les déformations du caisson de torsion et du dispositif d'ancrage.

La butée, le dispositif d'ancrage, le corps de pale, le manchon cylindrique et le caisson de torsion constituent ainsi un système de rétention et de reprises d'efforts dissociés de la pale. Ce système de rétention et de reprises d'efforts dissociés permet ainsi avantageusement que les efforts générés et subis par la pale soient repris indépendamment par les éléments de la pale, et du système de rétention et de reprises d'efforts dissociés en particulier.

En conséquence, chacun des éléments de la pale peut être optimisé aussi bien en termes de dimensions, de masses que de tenues mécaniques, sans remettre en cause le fonctionnement et la tenue mécanique aux efforts et à la fatigue du rotor dans son ensemble.

Par ailleurs, la portion profilée de la pale est totalement démontable du manchon cylindrique grâce à l'utilisation d'une liaison démontable, par exemple comportant au moins une vis et un écrou, entre la butée et le manchon cylindrique tout en conservant une grande sureté d'assemblage, cette liaison démontable étant sollicitée principalement en cisaillement.

La pale selon l'invention peut de plus comprendre une ou plusieurs des caractéristiques qui suivent, prises seules ou en combinaison.

Selon l'invention, le dispositif d'ancrage est en forme de U. Cette forme en U permet au dispositif d'ancrage d'entourer la butée afin d'éviter que le dispositif d'ancrage s'échappe de la butée lorsque la pale est soumise à une force centrifuge suite à la rotation du rotor. Le dispositif d'ancrage peut ainsi constituer un enroulement de pale.

Selon l'invention, le corps de pale est positionné au moins entre les deux branches du dispositif d'ancrage formant le U de sorte à éviter un rapprochement de ces deux branches lors des sollicitations subies par le dispositif d'ancrage.

Selon un autre exemple, le dispositif d'ancrage peut comporter des fibres unidirectionnelles. Ces fibres sont ainsi agencées parallèlement entre elles, par exemple le long d'une forme en U du dispositif d'ancrage. Ces fibres peuvent aussi être agencées parallèlement entre elles, essentiellement parallèlement à l'axe longitudinal. Ces fibres peuvent par exemple comporter des fibres en carbone et/ou en fibres de verre, imprégnées de résine.

Selon un autre exemple, la butée peut comporter une pièce cylindrique et au moins un dispositif de fixation de cette pièce cylindrique sur le manchon cylindrique. Cette pièce cylindrique peut être agencée perpendiculairement à l'axe longitudinal AXL. La pièce cylindrique coopère ainsi avec le dispositif d'ancrage pour former un arrêt efficace et fiable du dispositif d'ancrage, et par suite da la portion profilée de la pale, selon une direction parallèle à l'axe longitudinal AXL, à savoir selon une direction radiale du rotor lors de sa rotation.

Selon un autre exemple, la butée peut comporter une douille creuse solidaire du dispositif d'ancrage, une pièce cylindrique et au moins un dispositif de fixation de la pièce cylindrique sur le manchon cylindrique. La douille creuse et la pièce cylindrique sont agencées perpendiculairement à l'axe longitudinal AXL. Le dispositif d'ancrage entoure alors au moins partiellement la douille creuse, et la pièce cylindrique est positionnée dans la douille afin de relier le dispositif d'ancrage au manchon cylindrique.

Selon ces deux derniers exemples, ledit au moins un dispositif de fixation permet de fixer la pièce cylindrique sur le manchon cylindrique.

De plus, selon ces deux derniers exemples, les composants de la butée peuvent être métalliques.

Selon un autre exemple, la paroi interne du manchon cylindrique peut être de forme cylindrique à base circulaire et la zone d'appui du caisson de torsion peut comporter au moins partiellement une forme cylindrique à base circulaire coopérant avec ladite paroi interne pour former une liaison à un degré de liberté en rotation autour de l'axe longitudinal AXL et à un degré de liberté en translation selon l'axe longitudinal AXL, telle une liaison de type pivot glissant. La zone d'appui du caisson de torsion peut par exemple comporter une seule portée circonférentielle couvrant 360° autour de l'axe longitudinal AXL ou bien plusieurs portées réparties radialement autour de l'axe longitudinal AXL. De même, la zone d'appui peut comporter plusieurs portées réparties longitudinalement le long de l'axe longitudinal AXL ou une seule portée suffisamment longue pour permettre de former une liaison de type « centrage long » avec la paroi interne du manchon cylindrique.

Indépendamment du nombre de portées, la zone d'appui peut comporter par exemple une partie en métal ou en un dérivé de polymère, avec ou sans traitement de surface, afin de réduire l'usure au niveau du contact entre la paroi interne du manchon cylindrique et de la zone d'appui du caisson de torsion.

Selon un autre exemple, le caisson de torsion, le dispositif d'ancrage et/ou le corps de pale sont solidaires de la portion profilée. Le caisson de torsion, le dispositif d'ancrage et/ou le corps de pale peuvent ainsi être en continuité directe de la portion profilée, en appartenant par exemple à la structure en composite de cette portion profilée de la pale. Le caisson de torsion, le dispositif d'ancrage et/ou le corps de pale peuvent aussi être fixés à la portion profilée, par exemple, à la structure en composite de cette portion profilée.

Selon un autre exemple, le caisson de torsion, le dispositif d'ancrage et/ou le corps de pale sont solidaires d'au moins un longeron de la pale. Selon l'invention, le dispositif d'ancrage est une partie intégrante de cet au moins un longeron à savoir être en continuité directe de cet au moins un longeron.

Selon un autre exemple, le corps de pale peut comporter au moins un méplat et le manchon cylindrique peut comporter au moins une face plane coopérant avec le méplat. Cette au moins une face plane du manchon cylindrique est ainsi en contact avec cet au moins un méplat du corps de pale de sorte à assurer efficacement la reprise des efforts en torsion générés par les forces aérodynamiques subies par la pale lors de la rotation du rotor, notamment en réaction aux variations de pas de la pale. Ces efforts en torsion sont transmis depuis la portion profilée de la pale par le caisson de torsion, évitant avantageusement que tous ces efforts en torsion ne soient transmis à un éventuel longeron de la pale et/ou au corps de pale.

Cette au moins une face plane du manchon cylindrique et cet au moins un méplat du corps de pale sont agencés de préférence parallèlement à l'axe longitudinal AXL.

Le manchon cylindrique peut par exemple comporter deux faces planes et une chape, cette chape comportant deux supports munis chacun d'une face plane. Le corps de pale comporte alors deux méplats positionnés respectivement en appui plan sur une face plane de la chape.

De plus, la chape peut permettre la fixation de la butée sur le manchon cylindrique. Le corps de pale peut alors encadrer le dispositif d'ancrage entre les deux faces planes, donc entre les deux supports de la chape. L'expression « le corps de pale peut alors encadrer le dispositif d'ancrage entre les deux faces planes » signifie que le corps de pale comporte deux plaques munies chacune d'un méplat et situées de part et d'autre du dispositif d'ancrage, l'ensemble corps de pale-dispositif d'ancrage étant positionné entre les deux supports de la chape.

En absence d'appui plan entre le corps de pale et le manchon cylindrique, les efforts en torsion générés par les forces aérodynamiques subies par la pale lors de la rotation du rotor peuvent être repris par la butée en liaison avec le manchon cylindrique. Ces efforts en torsion sont dans ce cas transmis depuis la portion profilée de la pale à la butée par le caisson de torsion et le dispositif d'ancrage, éventuellement également par un longeron de la pale et/ou le corps de pale.

Selon un autre exemple, le caisson de torsion peut comporter des fibres orientées avec des angles compris entre ±10° et ±80° par rapport à l'axe longitudinal AXL. Une telle orientation des fibres permet au caisson de torsion d'avoir un module de cisaillement élevé. Les fibres du caisson de torsion sont orientées, par exemple à ±45° par rapport à l'axe longitudinal AXL. Le caisson de torsion peut être fabriqué par bobinage de ces fibres ou par drapage de tissus réalisé avec ces fibres.

Ces fibres peuvent par exemple comporter des fibres en carbone, en verre, et/ou en kevlar imprégnées de résine.

Le manchon cylindrique est par exemple en métal et peut comporter des pistes pour accueillir des roulements à billes. Le manchon cylindrique peut également être en matériaux composites, par exemple des fibres en carbone et/ou des fibres de verre, imprégnées de résine, et comporter des pistes adaptées, par exemple avec des inserts métalliques, pour accueillir les roulements à billes.

La présente invention a également pour objet un rotor comportant un moyeu et au moins deux pales. Ce rotor peut être par exemple un rotor de sustentation, un rotor auxiliaire anti couple ou une hélice d'avancement. Les pales sont telles que précédemment décrites, l'axe longitudinal AXL du manchon cylindrique étant confondu à un axe de pas de la pale. De plus, le rotor comporte une liaison à un degré de liberté en rotation, telle une liaison de type pivot, entre le moyeu et chaque manchon cylindrique autour de l'axe longitudinal AXL afin de permettre les variations de pas de la pale. Lors de la rotation du rotor autour de l'axe de rotation du moyeu, l'axe longitudinal de la pale est également sensiblement confondu avec une direction radiale du rotor en rotation.

De plus, le rotor comporte au moins un dispositif de guidage en rotation reliant respectivement chaque manchon cylindrique et le moyeu, afin de réaliser la liaison à un degré de liberté en rotation entre le moyeu et chaque manchon cylindrique autour de l'axe longitudinal AXL. Ce dispositif de guidage en rotation comporte par exemple un ou plusieurs roulements à billes à contacts obliques, à aiguilles ou à rouleaux.

Chaque dispositif de guidage peut comporter par exemple une bague intérieure, une bague extérieure et des éléments roulants, tels que des billes, des aiguilles ou des rouleaux. La bague intérieure est alors solidaire d'un manchon cylindrique et la bague extérieure est solidaire du moyeu. Le manchon cylindrique peut comporter par exemple un premier dispositif de butée du dispositif de guidage en rotation et de sa bague intérieure en particulier, selon l'axe longitudinal AXL et le moyeu peut comporter un second dispositif de butée du dispositif de guidage en rotation et de sa bague extérieure en particulier, selon l'axe longitudinal AXL afin retenir l'ensemble de la pale soumise à la force centrifuge lors de la rotation du rotor.

Le rotor selon l'invention permet avantageusement que le montage et le démontage de la pale soient facilités par rapport aux solutions existantes dont l'arrêt mécanique est uniquement obtenu par exemple par des billes du dispositif de guidage.

Chaque manchon cylindrique peut comporter un levier de pas pour effectuer les variations de pas de la pale. Le levier de pas est excentré sur le manchon cylindrique par rapport à l'axe longitudinal AXL.

Grâce au rotor selon l'invention, les efforts que l'on retrouve au niveau du pied de pale de chaque pale sont avantageusement repris indépendamment par les éléments du système de rétention et de reprises d'efforts dissociés de chaque pale, à savoir la butée, le dispositif d'ancrage, le corps de pale, le manchon cylindrique et le caisson de torsion.

De plus, les éléments du système de rétention et de reprises d'efforts dissociés de chaque pale comportent essentiellement des matériaux composites et sont sollicités dans les meilleures conditions d'utilisation par rapport aux orientations des fibres les constituant en fonction des efforts repris par chaque élément. En conséquence, les dimensions et la masse chacun de ces éléments du système de rétention et de reprises d'efforts dissociés de chaque pale peuvent être optimisées de même que leurs tenues mécaniques.

De plus, les risques de défaillance par corrosion sont également réduits, voire supprimés, en limitant l'utilisation de pièces métalliques.

Le rotor selon l'invention propose ainsi une nouvelle architecture pour la liaison entre chaque pale et le moyeu ainsi que pour le montage et le démontage d'une pale. De plus, le rotor selon l'invention peut permettre également d'améliorer la longévité des pales.

L'invention et ses avantages apparaîtront avec plus de détails dans le cadre de la description qui suit avec des exemples donnés à titre illustratif en référence aux figures annexées qui représentent :
- la figure 1, une vue d'un rotor muni de pales pour un aéronef,
- la figure 2, une vue d'un pied de pale d'une pale du rotor,
- la figure 3, une vue éclatée du pied de pale,
- la figure 4, une vue en coupe longitudinale du pied de pale,
- la figure 5, une vue en coupe longitudinale du pied de pale d'une pale d'un autre rotor,
- la figure 6, une première vue en coupe transversale du pied de pale selon la figure 5, et
- la figure 7, une seconde vue en coupe transversale du pied de pale selon la figure 5.

Les éléments présents dans plusieurs figures distinctes sont affectés d'une seule et même référence.

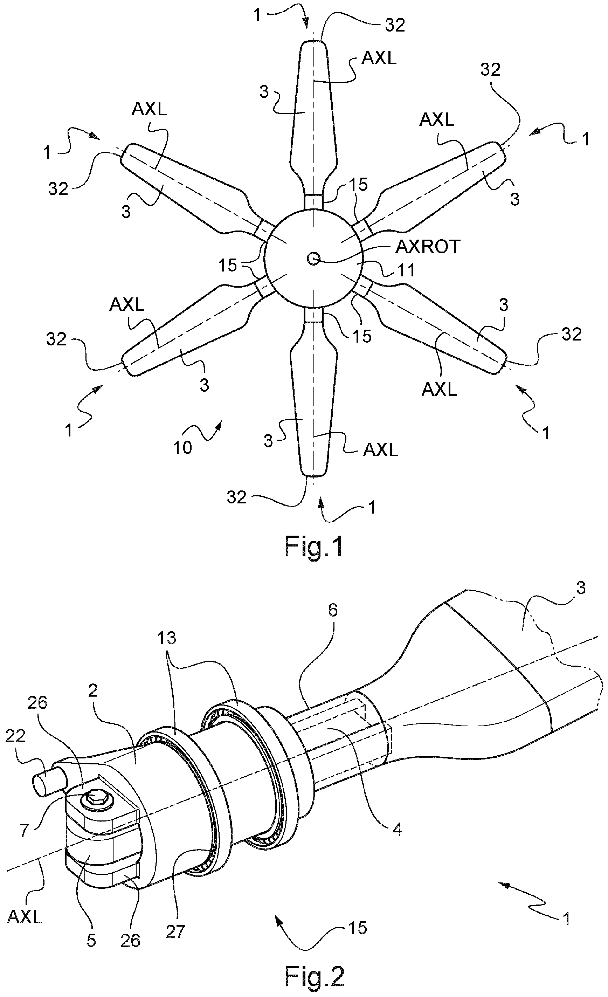

Un rotor 10 pour un aéronef est représenté sur la figure 1. Ce rotor 10 comporte un moyeu 11, au moins deux pales 1 et un axe de rotation AXROT du moyeu 11. L'exemple de rotor 10 représenté sur la figure 1 comporte six pales 1 bien qu'un nombre différent de pales 1 puisse être utilisé sans remettre en cause la mise en œuvre de l'invention. L'exemple de rotor 10 représenté sur la figure 1 est une hélice d'avancement d'un aéronef destiné à assurer au moins en partie l'avancement de l'aéronef qui peut être à voilure fixe et/ou à voilure tournante. Le rotor 11 peut aussi être un rotor de sustentation ou un rotor auxiliaire anti couple d'un aéronef à voilure tournante.

Chaque pale 1 comporte un pied de pale 15, une portion profilée 3 et une extrémité libre 32, la portion profilée 3 étant formée par une succession de profils aérodynamiques. L'axe longitudinal AXL d'une pale 1 s'étend selon une direction d'emplanture du pied de pale 15, fixé au moyeu 11, vers l'extrémité libre 32 de la pale 1.

Lors de la rotation du rotor 10 autour de l'axe de rotation AXROT, les pales 1 sont entraînées en rotation par le moyeu 11 autour de cet axe de rotation AXROT afin que chaque pale 1, et plus particulièrement la portion profilée 3 de chaque pale 1, génère une force aérodynamique. Lors d'une telle rotation du rotor 10, l'axe longitudinal AXL de chaque pale 1 est sensiblement confondu avec une direction radiale du rotor 10 et du moyeu 11 en rotation. Cette direction radiale s'étend perpendiculairement à l'axe de rotation AXROT du moyeu 11 autour de cet axe de rotation AXROT.

La figure 2 représente en détail le pied de pale 15 et la jonction avec la portion profilée 3. Le pied de pale 15 comporte une butée 7, un dispositif d'ancrage 5, un corps de pale 4, un manchon cylindrique 2 et un caisson de torsion 6.

Le caisson de torsion 6, le dispositif d'ancrage 5 et le corps de pale 4 sont solidaires de la portion profilée 3. Le caisson de torsion 6, le dispositif d'ancrage 5 et le corps de pale 4 peuvent ainsi être en continuité de la structure de la portion profilée 3, en étant par exemple solidaires d'au moins un longeron de la pale 1. Le caisson de torsion 6, le dispositif d'ancrage 5 et le corps de pale 4 peuvent aussi être fixés à la structure de la portion profilée 3.

Le manchon cylindrique 2 est creux et s'étend autour de l'axe longitudinal AXL. Le manchon cylindrique 2 comporte une paroi interne 25.

Le caisson de torsion 6 est creux et s'étend autour de l'axe longitudinal AXL. Le caisson de torsion 6 est positionné entre l'axe de rotation du moyeu AXROT et la portion profilée 3. Le caisson de torsion 6 est positionné au moins partiellement dans le manchon cylindrique 2.

Le dispositif d'ancrage 5 et le corps de pale 4 sont positionnés au moins partiellement dans le caisson de torsion 6. Le dispositif d'ancrage 5 et le corps de pale 4 sont également positionnés au moins partiellement dans le manchon cylindrique 2.

De plus, afin d'autoriser la rotation de la pale 1 autour d'un axe de pas sensiblement confondu avec son axe longitudinal AXL, au moins un dispositif de guidage 13 en rotation est agencé entre le manchon cylindrique 2 et le moyeu 11, et plus précisément un alésage du moyeu 11, afin de former une liaison à un degré de liberté en rotation, telle une liaison de type pivot, entre le moyeu 11 et le manchon cylindrique 2. Par exemple, deux dispositifs de guidage 13, tels que des roulements à billes, sont positionnés autour du manchon cylindrique 2. Un dispositif de guidage 13 peut comporter par exemple une bague intérieure, une bague extérieure et des éléments roulants, à savoir des billes dans l'exemple représenté. Selon un autre exemple, un ou plusieurs roulements à billes à contacts obliques peuvent être positionnés autour du manchon cylindrique 2.

Le manchon cylindrique 2 peut aussi comporter un premier dispositif de butée 27 formant un arrêt parallèlement à l'axe longitudinal AXL pour une bague intérieure d'un dispositif de guidage 13. Un premier dispositif de butée 27 est par exemple un épaulement intégré au manchon cylindrique 2.

L'alésage du moyeu 11 peut aussi comporter un second dispositif de butée formant un arrêt parallèlement à l'axe longitudinal AXL pour une bague extérieure d'un dispositif de guidage 13. Ce second dispositif de butée peut comporter un épaulement intégré à l'alésage du moyeu 11 et/ou être formé par une ou plusieurs pièces rapportées.

Le manchon cylindrique 2 peut encore comporter un levier de pas 22, excentré par rapport à l'axe longitudinal AXL, pour piloter la variation de pas de la pale 1.

Le dispositif d'ancrage 5 est donc positionné à l'intérieur du manchon cylindrique 2 et entoure au moins partiellement la butée 7 fixée au manchon cylindrique 2 de sorte que l'ensemble formé par la butée 7 et le dispositif d'ancrage 5 réalise un arrêt longitudinal de la pale 1, selon une direction parallèle à l'axe longitudinal AXL, et du pied de pale 15 vers l'extrémité libre 32 de la pale 1. Cet arrêt longitudinal s'oppose ainsi à un déplacement de la pale 1 sous l'effet de la force centrifuge appliquée à la pale 1 lors de la rotation du rotor 10 autour de l'axe de rotation AXROT.

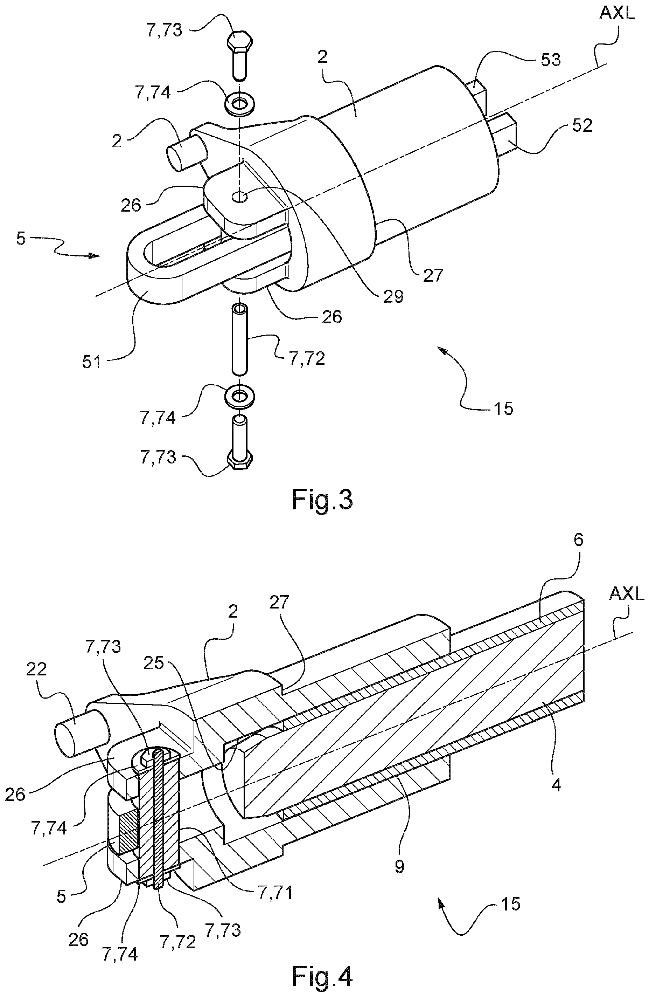

Un exemple de liaison entre la butée 7 et le dispositif d'ancrage 5 est représenté sur la figure 3 sous une forme éclatée. Le dispositif d'ancrage 5 entoure la butée 7 sur 180 degrés (180°) afin de réaliser l'arrêt longitudinal. La butée 7 comporte une pièce cylindrique 72 agencée perpendiculairement à l'axe longitudinal AXL et le dispositif d'ancrage 5 comporte une extrémité 51 en forme de U afin d'assurer une complémentarité de formes avec la pièce cylindrique 72 et, de fait, une bonne reprise des efforts générés par la force centrifuge appliquée à la pale 1 lors de la rotation du rotor 10. Le dispositif d'ancrage 5 comporte également deux bras 52,53 reliant l'extrémité 51 en U à la portion profilée 3. Le corps de pale 4 est positionné entre les bras 52,53 et est en appui contre chaque bras 52,53 afin de limiter les déformations des bras 52,53.

La pièce cylindrique 72 de la butée 7 est par exemple fixée entre deux supports d'une chape 26 du manchon cylindrique 2, chaque support de la chape 26 comportant un orifice 29. La butée 7 peut comporter au moins un dispositif de fixation 73 démontable, telle une vis 73 par exemple, afin de fixer la pièce cylindrique 72 à chaque support de la chape 26, la pièce cylindrique 72 comportant à chacune de ses extrémités un trou taraudé. Une rondelle 74 peut être intercalée entre un support et un dispositif de fixation 73.

La butée 7 peut aussi comporter selon l'exemple représenté sur la figure 4, une douille 71 cylindrique creuse, une pièce cylindrique 72 et au moins un dispositif de fixation 73 démontable. La douille 71 et la pièce cylindrique 72 sont agencées perpendiculairement à l'axe longitudinal AXL. La douille 71 est solidaire du dispositif d'ancrage 5 comportant une extrémité 51 en forme de U afin d'assurer une complémentarité de formes avec la douille 71 pour reprendre les efforts générés par la force centrifuge appliquée à la pale 1 lors de la rotation du rotor 10. Le dispositif d'ancrage 5 comporte également deux bras 52,53 reliant l'extrémité 51 en U à la portion profilée 3.

La pièce cylindrique 72 est positionnée dans la douille 71 et est fixée entre deux supports de la chape 26 du manchon cylindrique 2, chaque support de la chape 26 comportant un orifice 29. La butée 7 comporte alors deux dispositifs de fixation démontable, telle deux écrous 73 par exemple afin de fixer la pièce cylindrique 72 à chaque support de la chape 26, la pièce cylindrique 72 comportant à chacune de ses extrémités une tige filetée. Une rondelle 74 peut être intercalée entre un support et un dispositif de fixation 73.

Le corps de pale 4 et le dispositif d'ancrage 5 sont positionnés à l'intérieur du manchon cylindrique 2 et du caisson de torsion 6 comme représenté sur la figure 4. Le caisson de torsion 6 comporte une zone d'appui 9 en contact avec la paroi interne 25 du manchon cylindrique 2.

Cette zone d'appui 9 qui est en contact avec la paroi interne 25 du manchon cylindrique 2 permet avantageusement la reprise des efforts en flexion subis par la pale 1 consécutivement aux forces aérodynamiques subies par la pale 1 lors de la rotation du rotor 10.

Selon l'exemple représenté sur la figure 4, la zone d'appui 9 du caisson de torsion 6 comporte une seule portée cylindrique autour de l'axe longitudinal AXL et couvrant le long de l'axe longitudinal AXL une longueur supérieure au diamètre de la paroi interne 25 afin de former une liaison de type « centrage long » entre le manchon cylindrique 2 et le caisson de torsion 6.

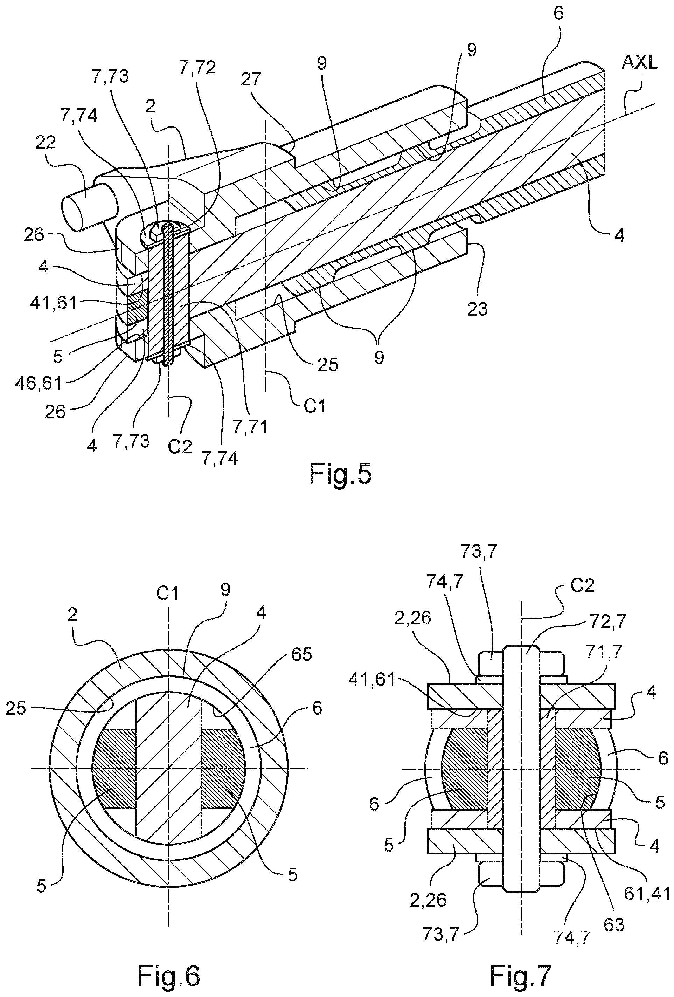

Selon un autre exemple représenté sur la figure 5, la zone d'appui 9 du caisson de torsion 6 comporte deux portées cylindriques positionnées le long de l'axe longitudinal AXL.

De plus, le corps de pale 4 peut être en appui contre la butée 7, et en particulier contre la douille 71 sur l'exemple représenté, selon l'axe longitudinal AXL.

La figure 6 représente une vue en coupe de l'exemple de la figure 5 perpendiculairement à l'axe longitudinal AXL au niveau d'une portée de la zone d'appui 9. La paroi interne 25 du manchon cylindrique 2 peut être de forme cylindrique à base circulaire et la zone d'appui 9 peut comporter au moins partiellement une forme cylindrique à base circulaire, comme représenté sur la figure 6, afin de former une liaison à un degré de liberté en rotation autour de l'axe longitudinal AXL et à un degré de liberté en translation selon l'axe longitudinal AXL, telle une liaison de type pivot glissant, entre le manchon cylindrique 2 et le caisson de torsion 6.

Le dispositif d'ancrage 5 et le corps de pale 4 sont positionnés au moins partiellement dans le caisson de torsion 6, selon l'exemple de la figure 6, et en contact avec une surface intérieure du caisson de torsion 6.

La figure 7 représente une vue en coupe de l'exemple de la figure 5 perpendiculairement à l'axe longitudinal AXL et passant par un axe de la butée 7, en particulier un axe de la douille 71 et de la pièce cylindrique 72. Selon cet exemple, le corps de pale 4 comporte au moins un méplat 41 et spécifiquement deux méplats 41 diamétralement opposés par rapport à l'axe longitudinal AXL. Chaque support de la chape 26 comporte alors au moins une face plane 61 coopérant respectivement avec un méplat 41, et spécifiquement deux faces planes 61. Ces deux faces planes 61 sont ainsi en contact respectivement avec les deux méplats 41 de sorte à participer à la reprise de l'effort en torsion généré par les forces aérodynamiques subies par la pale 1 lors de la rotation du rotor 11.

D'autres formes complémentaires entre elles peuvent être utilisées pour le corps de pale 4 et le manchon cylindrique 2 afin de participer à la reprise de cet effort en torsion. Le corps de pale 4 et une forme interne manchon cylindrique 2 peuvent par exemple être de forme parallélépipédique ou de forme ovoïde.

La butée 7, le dispositif d'ancrage 5, le corps de pale 4, le manchon cylindrique 2 et le caisson de torsion 6 permettent ainsi de reprendre indépendamment les différents efforts générés et subis par la pale 1 lors de la rotation du rotor 11. La butée 7, le dispositif d'ancrage 5, le corps de pale 4, le manchon cylindrique 2 et le caisson de torsion 6 peuvent ainsi former un système de rétention et de reprises d'efforts dissociés de la pale 1.

La butée 7, le dispositif d'ancrage 5, le corps de pale 4, le manchon cylindrique 2 et le caisson de torsion 6 peuvent ainsi être avantageusement optimisés au niveau de leurs dimensions, leurs masses ainsi que de leurs tenues mécaniques, sans remettre en cause le fonctionnement et la tenue mécanique aux efforts et à la fatigue du rotor 11 dans son ensemble.

En l'absence de telles formes complémentaires entre elles pour le corps de pale 4 et le manchon cylindrique 2, la reprise des efforts en torsion générés par les forces aérodynamiques subies par la pale 1 lors de la rotation du rotor peuvent être repris par la butée 7 en liaison avec le manchon cylindrique 2.

Naturellement, la présente invention est sujette à de nombreuses variations quant à sa mise en œuvre.

## Revendications

1. Pale (1) pour un rotor (10), ladite pale (1) comportant :
- un manchon cylindrique (2) creux s'étendant autour d'un axe longitudinal (AXL) et muni d'une paroi interne (25),
- une butée (7) fixée audit manchon cylindrique (2),
- une portion profilée (3),
- un dispositif d'ancrage (5) solidaire de ladite portion profilée (3), et
- un corps de pale (4) solidaire de ladite portion profilée (3),
- au moins un longeron,
- un caisson de torsion (6) creux solidaire de ladite portion profilée (3) et enveloppant au moins partiellement le corps de pale (4), le caisson de torsion (6) comportant une zone d'appui (9) en contact avec ladite paroi interne (25) dudit manchon cylindrique (2),
- où ledit dispositif d'ancrage (5) est positionné à l'intérieur dudit manchon cylindrique (2) et entoure au moins partiellement ladite butée (7), et
- ledit corps de pale (4) est positionné à l'intérieur dudit manchon cylindrique (2), le dispositif d'ancrage (5) ayant une forme en U en continuité de cet au moins un longeron de la pale (1) , le corps de pale (4) étant positionné au moins entre deux branches du dispositif d'ancrage (5) formant le U.

2. Pale (1) selon la revendication 1, dans laquelle ledit manchon cylindrique (2) et le corps de pale (4) ont des formes complémentaires.

3. Pale (1) selon l'une quelconque des revendications 1 à 2, dans laquelle ledit dispositif d'ancrage (5) comporte des fibres unidirectionnelles.

4. Pale (1) selon l'une quelconque des revendications 1 à 3, dans laquelle ledit dispositif d'ancrage (5) et ledit corps de pale (4) sont solidaires d'au moins un longeron de ladite pale (1).

5. Pale (1) selon l'une quelconque des revendications 1 à 4, dans laquelle ladite butée (7) comporte une pièce cylindrique (72) agencée perpendiculairement audit axe longitudinal (AXL) et reliant ledit dispositif d'ancrage (5) audit manchon cylindrique (2) et au moins un dispositif de fixation (73) de ladite pièce cylindrique (72) sur ledit manchon cylindrique (2).

6. Pale (1) selon l'une quelconque des revendications 1 à 4, dans laquelle ladite butée (7) comporte une douille (71) creuse solidaire dudit dispositif d'ancrage (5) et une pièce cylindrique (72) agencées perpendiculairement audit axe longitudinal (AXL) ainsi qu'au moins un dispositif de fixation (73) de ladite pièce cylindrique (72) sur ledit manchon cylindrique (2), ledit dispositif d'ancrage (5) entourant au moins partiellement ladite douille (71), ladite pièce cylindrique (72) étant positionnée dans ladite douille (71) afin de relier ledit dispositif d'ancrage (5) audit manchon cylindrique (2).

7. Pale (1) selon l'une quelconque des revendications 1 à 6, dans laquelle ladite paroi interne (25) dudit manchon cylindrique (2) est de forme cylindrique à base circulaire et ladite zone d'appui (9) dudit caisson de torsion (6) peut comporter au moins partiellement une forme cylindrique à base circulaire coopérant avec ladite paroi interne (25) pour former une liaison à un degré de liberté en rotation autour de l'axe longitudinal (AXL) et à un degré de liberté en translation selon l'axe longitudinal (AXL).

8. Pale (1) selon l'une quelconque des revendications 1 à 7, dans laquelle ledit caisson de torsion (23) comporte des fibres orientées avec des angles compris entre ±10° et ±80° par rapport à audit axe longitudinal (AXL).

9. Pale (1) selon l'une quelconque des revendications 1 à 8, dans laquelle ledit corps de pale (4) comporte au moins un méplat (41) et ledit manchon cylindrique (2) comporte au moins une face plane (61) coopérant avec ledit méplat (41).

10. Pale (1) selon la revendication 9, dans laquelle ledit manchon cylindrique (2) comporte deux faces planes (61) et une chape (26), ladite chape (26) comportant deux supports munis chacun d'une face plane (61), ledit corps de pale (4) encadrant ledit dispositif d'ancrage (5) entre lesdites deux faces planes (61).

11. Pale (1) selon l'une quelconque des revendications 1 à 10, dans laquelle ledit corps de pale (4) est en appui contre ladite butée (7) selon ledit axe longitudinal (AXL).

12. Rotor (10) comportant :
- un moyeu (11), et
- au moins deux pales (1),
dans lequel lesdites au moins deux pales (1) sont selon l'une quelconque des revendications 1 à 11, ledit axe longitudinal (AXL) dudit manchon cylindrique (2) étant confondu à un axe de pas de ladite pale (1), ledit rotor (10) comportant une liaison à un degré de liberté en rotation entre ledit moyeu (11) et chaque manchon cylindrique (2) autour dudit axe longitudinal (AXL).

13. Rotor (10) selon la revendication 12, dans lequel ledit rotor (11) comporte au moins un dispositif de guidage (13) en rotation reliant respectivement chaque manchon cylindrique (2) et ledit moyeu (11).

14. Rotor (10) selon la revendication 13, dans lequel ledit au moins un dispositif de guidage (13) comporte une bague intérieure (51), une bague extérieure (52) et des éléments roulants (53), ladite bague intérieure (51) étant solidaire dudit manchon cylindrique (2) et ladite bague extérieure (52) étant solidaire dudit moyeu (11), ledit manchon cylindrique (2) comportant un premier dispositif de butée (27) et ledit moyeu (11) comportant un second dispositif de butée selon ledit axe longitudinal (AXL).

15. Rotor (10) selon l'une quelconque des revendications 12 à 14, dans lequel chaque manchon cylindrique (2) comporte un levier (22) de pilotage de pas de ladite pale (1).

## Patentansprüche

1. Blatt (1) für einen Rotor (10), wobei das Blatt (1) umfasst:
- eine hohle zylindrische Hülse (2), die sich um eine Längsachse (AXL) erstreckt und eine Innenwand (25) aufweist,
- einen an der zylindrischen Hülse (2) befestigten Anschlag (7),
- einen profilierten Abschnitt (3),
- eine mit dem profilierten Abschnitt (3) verbundene Verankerungsvorrichtung (5) und
- einen mit dem profilierten Abschnitt (3) verbundenen Blattkörper (4),
- mindestens einen Längsträger,
- einen hohlen Torsionskasten (6), der fest mit dem profilierten Abschnitt (3) verbunden ist und den Blattkörper (4) mindestens teilweise umgibt, wobei der Torsionskasten (6) einen Auflagebereich (9) aufweist, der mit der Innenwand (25) der zylindrischen Hülse (2) in Kontakt steht,
- wobei die Verankerungsvorrichtung (5) innerhalb der zylindrischen Hülse (2) positioniert ist und den Anschlag (7) zumindest teilweise umgibt, und
- wobei der Blattkörper (4) innerhalb der zylindrischen Hülse (2) positioniert ist, wobei die Verankerungsvorrichtung (5) eine U-Form in Verlängerung des mindestens einen Längsträgers des Blattes (1) aufweist, und der Blattkörper (4) mindestens zwischen zwei das U bildenden Schenkeln der Verankerungsvorrichtung (5) positioniert ist.

2. Blatt (1) nach Anspruch 1,
bei dem die zylindrische Hülse (2) und der Blattkörper (4) komplementäre Formen aufweisen.

3. Blatt (1) nach einem der Ansprüche 1 bis 2,
bei dem die Verankerungsvorrichtung (5) unidirektionale Fasern aufweist.

4. Blatt (1) nach einem der Ansprüche 1 bis 3,
bei dem die Verankerungsvorrichtung (5) und der Blattkörper (4) mit mindestens einem Längsträger des Blattes (1) fest verbunden sind.

5. Blatt (1) nach einem der Ansprüche 1 bis 4,
bei dem der Anschlag (7) ein zylindrisches Teil (72), das senkrecht zur Längsachse (AXL) angeordnet ist und die Verankerungsvorrichtung (5) mit der zylindrischen Hülse (2) verbindet, und mindestens eine Befestigungsvorrichtung (73) des zylindrischen Teils (72) an der zylindrischen Hülse (2) aufweist.

6. Blatt (1) nach einem der Ansprüche 1 bis 4,
bei dem der Anschlag (7) eine mit der Verankerungsvorrichtung (5) verbundene hohle Hülse (71) und ein zylindrisches Teil (72), die senkrecht zur Längsachse (AXL) angeordnet sind, sowie mindestens eine Befestigungsvorrichtung (73) des zylindrischen Teils (72) an der zylindrischen Hülse (2) aufweist, wobei die Verankerungsvorrichtung (5) die Hülse (71) zumindest teilweise umgibt, und das zylindrische Teil (72) in der Hülse (71) positioniert ist, um die Verankerungsvorrichtung (5) mit der zylindrischen Hülse (2) zu verbinden.

7. Blatt (1) nach einem der Ansprüche 1 bis 6,
bei dem die Innenwand (25) der zylindrischen Hülse (2) eine zylindrische Form mit kreisförmiger Grundfläche aufweist und der Auflagebereich (9) des Torsionskastens (6) zumindest teilweise eine zylindrische Form mit kreisförmiger Grundfläche aufweisen kann, die mit der Innenwand (25) zusammenwirkt, um eine Verbindung mit einem Drehfreiheitsgrad um die Längsachse (AXL) und einem Translationsfreiheitsgrad entlang der Längsachse (AXL) zu bilden.

8. Blatt (1) nach einem der Ansprüche 1 bis 7,
bei dem der Torsionskasten (23) Fasern aufweist, die in Winkeln zwischen ±10° und ±80° zur Längsachse (AXL) ausgerichtet sind.

9. Blatt (1) nach einem der Ansprüche 1 bis 8,
bei dem der Blattkörper (4) mindestens eine Abflachung (41) aufweist, und die zylindrische Hülse (2) mindestens eine ebene Fläche (61) aufweist, die mit der Abflachung (41) zusammenwirkt.

10. Blatt (1) nach Anspruch 9,
bei dem die zylindrische Hülse (2) zwei ebene Flächen (61) und eine Gabel (26) aufweist, wobei die Gabel (26) zwei Träger aufweist, die jeweils mit einer ebenen Fläche (61) versehen sind, und der Blattkörper (4) die Verankerungsvorrichtung (5) zwischen den beiden ebenen Flächen (61) einfasst.

11. Blatt (1) nach einem der Ansprüche 1 bis 10,
bei dem der Blattkörper (4) entlang der Längsachse (AXL) an dem Anschlag (7) anliegt.

12. Rotor (10) mit:
- einer Nabe (11) und
- mindestens zwei Blättern (1),
wobei die mindestens zwei Blätter (1) gemäß einem der Ansprüche 1 bis 11 sind, wobei die Längsachse (AXL) der zylindrischen Hülse (2) mit einer Anstellwinkelachse des Blattes (1) zusammenfällt, wobei der Rotor (10) eine Verbindung mit einem Drehfreiheitsgrad um die Längsachse (AXL) zwischen der Nabe (11) und jeder zylindrischen Hülse (2)aufweist.

13. Rotor (10) nach Anspruch 12,
wobei der Rotor (11) mindestens eine Drehführungseinrichtung (13) aufweist, die jeweils jede zylindrische Hülse (2) und die Nabe (11) verbindet.

14. Rotor (10) nach Anspruch 13,
bei dem die mindestens eine Führungseinrichtung (13) einen Innenring (51), einen Außenring (52) und Wälzkörper (53) aufweist, wobei der Innenring (51) fest mit der zylindrischen Hülse (2) verbunden ist und der Außenring (52) fest mit der Nabe (11) verbunden ist, wobei die zylindrische Hülse (2) eine erste Anschlagvorrichtung (27) und die Nabe (11) eine zweite Anschlagvorrichtung entlang der Längsachse (AXL) aufweist.

15. Rotor (10) nach einem der Ansprüche 12 bis 14,
bei dem jede zylindrische Hülse (2) einen Hebel (22) zum Steuern des Anstellwinkels des Flügels (1) aufweist.

## Claims

1. Blade (1) for a rotor (10), said blade (1) comprising:
- a hollow cylindrical sleeve (2) extending about a longitudinal axis (AXL) and provided with an internal wall (25),
- an abutment (7) fixed to said cylindrical sleeve (2),
- a profiled portion (3),
- an anchoring device (5) integral with said profiled portion (3), and
- a blade body (4) secured to said profiled portion (3),
- at least one spar,
a hollow torque box (6) secured to said profiled portion (3) and enveloping at least partially the blade body (4), the torque box (6) comprising a bearing zone (9) in contact with said internal wall (25) of said cylindrical sleeve (2),
- where said anchoring device (5) is positioned inside said cylindrical sleeve (2) and surrounds at least partially said abutment (7), and
- said blade body (4) is positioned inside said cylindrical sleeve (2), the anchoring device (5) having a U-shape in continuity of this at least one spar of the blade (1), the blade body (4) being positioned at least between two branches of the anchoring device (5) forming the U.

2. Blade (1) according to claim 1,
wherein said cylindrical sleeve (2) and the blade body (4) have complementary shapes.

3. Blade (1) according to any one of claims 1 to 2,
wherein said anchoring device (5) comprises one-directional fibres.

4. Blade (1) according to any one of claims 1 to 3, wherein said anchoring device (5) and said blade body (4) are secured to at least one spar of said blade (1).

5. Blade (1) according to any one of claims 1 to 4, wherein said abutment (7) comprises a cylindrical part (72) arranged perpendicularly to said longitudinal axis (AXL) and connecting said anchoring device (5) to said cylindrical sleeve (2) and at least one fixing device (73) of said cylindrical part (72) on said cylindrical sleeve (2).

6. Blade (1) according to any one of claims 1 to 4, wherein said abutment (7) comprises a hollow socket (71) are secured to said anchoring device (5) and a cylindrical part (72) arranged perpendicularly to said longitudinal axis (AXL), as well as at least one fixing device (73) of said cylindrical part (72) on said cylindrical sleeve (2), said anchoring device (5) surrounding at least partially said socket (71), said cylindrical part (72) being positioned in said socket (71) in order to connect said anchoring device (5) to said cylindrical sleeve (2).

7. Blade (1) according to any one of claims 1 to 6, wherein said internal wall (25) of said cylindrical sleeve (2) is cylindrical with a circular-base, and said bearing zone (9) of said torque box (6) may comprise at least partially a cylindrical-shape with a circular-base, engaging with said internal wall (25) to form a connection with a degree of freedom in rotation about the longitudinal axis (AXL) and with a degree of freedom in translation about the longitudinal axis (AXL).

8. Blade (1) according to any one of claims 1 to 7,
wherein said torque box (23) comprises fibres oriented with angles of between ±10° and ±80° with respect to said longitudinal axis (AXL).

9. Blade (1) according to any one of claims 1 to 8,
wherein said blade body (4) comprises at least one flat spot (41) and said cylindrical sleeve (2) comprises at least one flat face (61) engaging with said flat spot (41).

10. Blade (1) according to claim 9,
wherein said cylindrical sleeve (2) comprises two flat faces (61) and a yoke (26), said yoke (26) comprising two supports, each provided with a flat face (61), said blade body (4) framing said anchoring device (5) between said two flat faces (61).

11. Blade (1) according to any one of claims 1 to 10,
wherein said blade body (4) bears against said abutment (7) about said longitudinal axis (AXL).

12. Rotor (10) comprising:
- a hub (11), and
- at least two blades (1),
wherein said at least two blades (1) are according to any one of claims 1 to 11, said longitudinal axis (AXL) of said cylindrical sleeve (2) coinciding with a pitch axis of said blade (1), said rotor (10) comprising a connection with a degree of freedom in rotation between said hub (11) and each cylindrical sleeve (2) about said longitudinal axis (AXL).

13. Rotor (10) according to claim 12,
wherein said rotor (11) comprises at least one rotating guiding device (13) connecting respectively each cylindrical sleeve (2) and said hub (11).

14. Rotor (10) according to claim 13, wherein
said at least one guiding device (13) comprises an inner ring (51), an outer ring (52) and rolling elements (53), said inner ring (51) being secured to said cylindrical sleeve (2) and said outer ring (52) being secured to said hub (11), said cylindrical sleeve (2) comprising a first abutment device (27) and said hub (11) comprising a second abutment device about said longitudinal axis (AXL).

15. Rotor (10) according to any one of claims 12 to 14, wherein each cylindrical sleeve (2) comprises a piloting pitch lever (22) of said blade (1).
